# FASCICULE DE BREVET EUROPEEN

(11) **EP 2 253 186 B1**
(45) Date de publication et mention de la délivrance du brevet: **14.03.2012**
(21) Numéro de dépôt: 10162335.3
(22) Date de dépôt: 07.05.2010
(51) Int. Cl.: A01B 73/04, A01D 78/10

(54) **Machine de fenaison**
Heuwerbungsmaschine
Haymaking machine

(30) Priorité: 14.05.2009 FR 0953193
(43) Date de publication de la demande: 24.11.2010
(73) Titulaire: KUHN S.A., 67700 Saverne (FR)
(72) Inventeur: Hacquard, Jean-Marc, 67310 Westhoffen (FR)
(74) Mandataire: Andres, Jean-Claude

(56) Documents cités:
- EP-A- 0 465 393
- EP-A- 0 517 632
- DE-U1-202007 001 281
- FR-A- 2 838 284
- FR-A- 2 882 622

## Description

La présente invention se rapporte à une machine de fenaison, notamment une andaineuse de végétaux couchés sur le sol, comportant une structure porteuse sur laquelle est articulé au moins un bras latéral qui est muni d'une roue râteleuse, laquelle roue râteleuse est déplaçable au moyen dudit bras dans au moins une position de travail, une position intermédiaire et une position de transport.

Dans la position de travail, chaque roue râteleuse se déplace sur le sol et est entraînée en rotation de sorte qu'elle râtelle les végétaux couchées sur le sol et forme un andain.

Dans la position intermédiaire, chaque roue râteleuse est soulevée, au moyen de son bras, d'une hauteur telle qu'elle puisse passer par-dessus des andains déjà formés, sans les défaire, par exemple lors des manoeuvres pour faire demi-tour en bout de terrain.

Dans la position de transport, chaque roue râteleuse est amenée dans une position sensiblement verticale, afin de réduire la largeur de la machine, pour lui permettre d'emprunter des chemins ou des routes.

Sur une machine de ce genre, il est avantageux d'avoir chaque bras latéral qui porte une roue râteleuse le plus court possible. De ce fait, l'articulation dudit bras sur la structure porteuse se situe souvent au-dessus de la roue râteleuse correspondante. Le déplacement en hauteur pour la position intermédiaire est alors relativement limité étant donné que la roue râteleuse correspondante ne doit pas entrer en collision avec ladite articulation.

Dans le cas de machines avec deux roues râteleuses coopérant pour la formation d'un andain latéral, ces deux roues râteleuses se situent même partiellement sous la structure porteuse durant le travail. Ces roues râteleuses peuvent alors difficilement être amenées dans une position intermédiaire suffisamment élevée pour passer au-dessus d'andains ayant un gros volume comme c'est fréquemment le cas en première coupe.

Sur une machine de ce genre qui est décrite dans le brevet EP 514 302, les axes d'articulation sur la structure porteuse des bras qui portent les roues râteleuses se situent à une distance du sol qui est au moins le double de la hauteur des roues râteleuses. Cette importante distance doit permettre de soulever ces roues râteleuses de la hauteur d'un andain tout en restant en dessous des axes d'articulation de leurs bras. Ce mode de réalisation nécessite une structure porteuse qui est elle-même très éloignée du sol. Cela augmente la hauteur de l'ensemble, ce qui nuit à la stabilité de la machine notamment dans la position de transport.

EP-A-0465393 décrit une machine comportant les caractéristiques du préambule de la revendication 1.

Le but de la présente invention est de proposer une machine de fenaison notamment pour l'andainage de végétaux qui ne comportent pas les inconvénients précités des machines connues.

A cet effet, une importante caractéristique de l'invention consiste en ce que la machine comporte des moyens constitués par un premier vérin hydraulique qui déplace le bras latéral par rapport à la structure porteuse, un second vérin hydraulique qui déplace la roue râteleuse longitudinalement sur ledit bras et une boîte qui commande simultanément les deux vérins hydrauliques et combinant un déplacement vers le haut du bras latéral par rapport à la structure porteuse et un déplacement longitudinal de la roue râteleuse vers l'extrémité extérieure dudit bras latéral lors du passage de la position de travail dans la position intermédiaire.

Ledit déplacement longitudinal permet notamment d'éloigner la roue râteleuse de la structure porteuse durant la mise en position intermédiaire. Cette roue râteleuse ne risque alors plus de rencontrer un obstacle de la structure porteuse, ce qui permet d'obtenir une mise en position très rapide et suffisante pour passer au-dessus des andains de gros volume.

D'autres caractéristiques et avantages de l'invention ressortiront de la description ci-après avec référence aux dessins annexés qui représentent, à titre d'exemple non limitatif, une forme de réalisation de la machine selon l'invention.

Sur ces dessins :
- la figure 1 représente une vue de dessus d'une machine selon l'invention avec deux roues râteleuses,
- la figure 2 représente une vue de détail d'une roue râteleuse en position de travail,
- la figure 3 représente une vue de détail d'une roue râteleuse en position intermédiaire,
- la figure 4 représente une vue de détail d'une roue râteleuse en position de transport,
- la figure 5 représente un exemple de commande hydraulique des moyens pour déplacer les roues râteleuses de la machine de la figure 1.

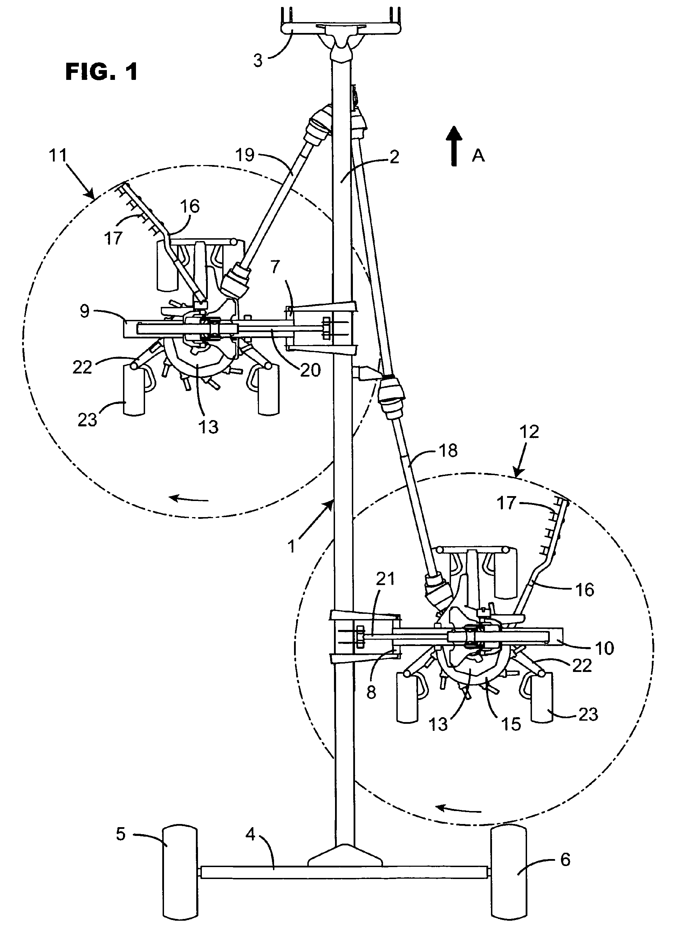

Telle qu'elle est représentée sur la figure 1, la machine selon l'invention est une andaineuse de végétaux couchés sur le sol. Elle comporte une structure porteuse (1) constituée par une poutre centrale (2) qui possède à son extrémité avant un dispositif d'accouplement (3) pour l'accrocher à un tracteur, non représenté, permettant de déplacer la machine dans une direction d'avancement (A). Ladite poutre (2) possède à son extrémité arrière une traverse (4) munie de roues (5 et 6) qui roulent sur le sol. Sur chaque côté de la poutre (2) est articulé, au moyen d'un axe (7, 8) sensiblement horizontal, un bras latéral (9,10) qui porte une roue râteleuse (11, 12). Dans l'exemple représenté, les deux bras latéraux (9, 10) et les roues râteleuses (11, 12) correspondantes sont décalés dans la direction d'avancement (A). Les végétaux andainés par la roue râteleuse (11) la plus en avant peuvent être repris par la roue râteleuse (12) la plus en arrière pour la formation d'un andain unique de plus grand volume.

La poutre (2) pourrait ne comporter qu'un seul bras latéral et une seule roue râteleuse. Elle pourrait aussi comporter, de chaque côté, deux bras latéraux avec des longueurs différentes et portant chacun une roue râteleuse. Dans ce cas, la machine comporterait quatre roues râteleuses qui lui permettraient d'atteindre une largeur de travail plus importante.

Les roues râteleuses (11 et 12) sont sensiblement identiques. Chacune comporte un carter (13) dans lequel est fixé un axe support (14) sensiblement vertical en position de travail. Sous ce carter (13) est disposé un boîtier (15) avec des bras (16) qui s'étendent vers l'extérieur et qui sont équipés d'outils de travail (17) tels que des fourches. Ce boîtier (15) est monté sur l'axe support (14) de manière à pouvoir tourner sur celui-ci. Les bras porte-outils (16) sont guidés dans des paliers solidaires du boîtier (15) de sorte qu'ils puissent pivoter autour de leurs axes géométriques longitudinaux respectifs. A l'intérieur de ce boîtier (15) est prévue une came de commande immobile qui est fixée sur l'axe support (14). Chaque bras porte-outils (16) comporte à son extrémité qui est située dans le boîtier (15) un levier avec un galet qui est guidé dans ladite came. Lesdits bras porte-outils (16) sont ainsi commandés de sorte que leurs outils (17) ramassent les végétaux notamment sur la partie avant de leur trajectoire et les déposent sous la forme d'un andain dans la partie latérale de leur trajectoire. Des roues râteleuses avec des outils de travail non commandés pourraient également équiper la machine selon l'invention.

Dans le carter (13) de chaque roue râteleuse (11,12) sont logés des moyens pour entraîner le boîtier (15) en rotation sur l'axe support (14). Ces moyens sont constitués par une couronne dentée qui est solidaire de la partie supérieure du boîtier (15) et un pignon d'entraînement qui engrène avec ladite couronne. Ce pignon est lié à un arbre qui s'étend hors du carter (13). Sur cet arbre est branché un arbre de transmission (18, 19) qui peut être réalisé en plusieurs parties et qui est animé à partir de l'arbre de prise de force du tracteur. L'entraînement en rotation du boîtier (15) de chaque roue râteleuse (11, 12) pourrait également être effectué avec un moteur hydraulique.

Le bras porteur (9, 10) de chaque roue râteleuse (11, 12) est équipé d'un premier vérin hydraulique (20, 21) qui permet de le pivoter autour de son axe d'articulation (7, 8). Chaque vérin hydraulique (20, 21) est articulé avec une de ses extrémités sur la poutre (2) et avec son autre extrémité sur le bras (9, 10) correspondant. Chacun de ces premiers vérins hydrauliques (20, 21) peut être à double effets de manière à pouvoir être commandé lors de l'allongement et lors du raccourcissement.

L'axe support (14) de chaque roue râteleuse (11, 12) est muni à son extrémité inférieure d'un bâti (22) avec plusieurs roues (23) d'appui au sol. Ces dernières roulent sur le sol durant le travail et font suivre les dénivellations du sol aux roues râteleuses (11, 12).

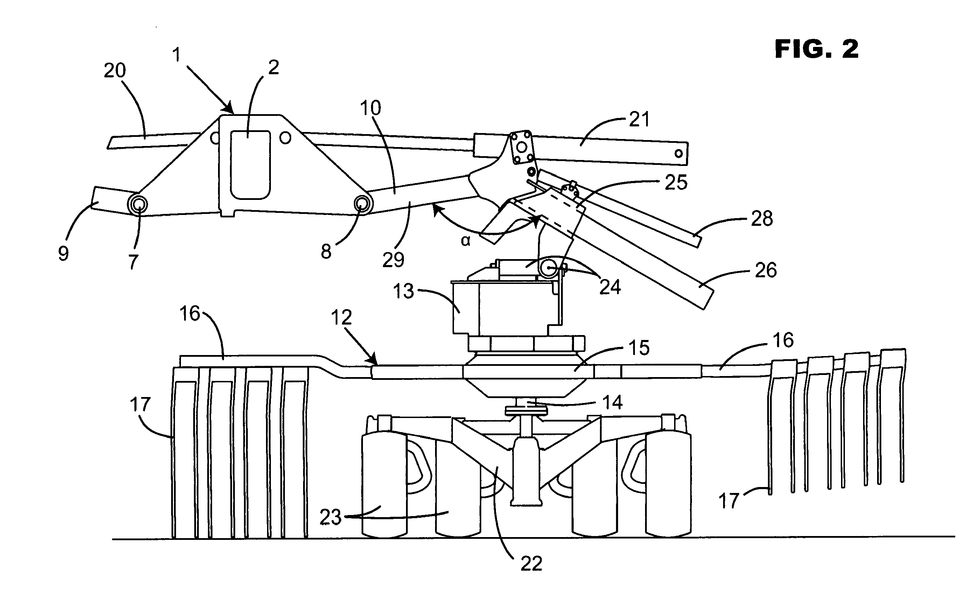

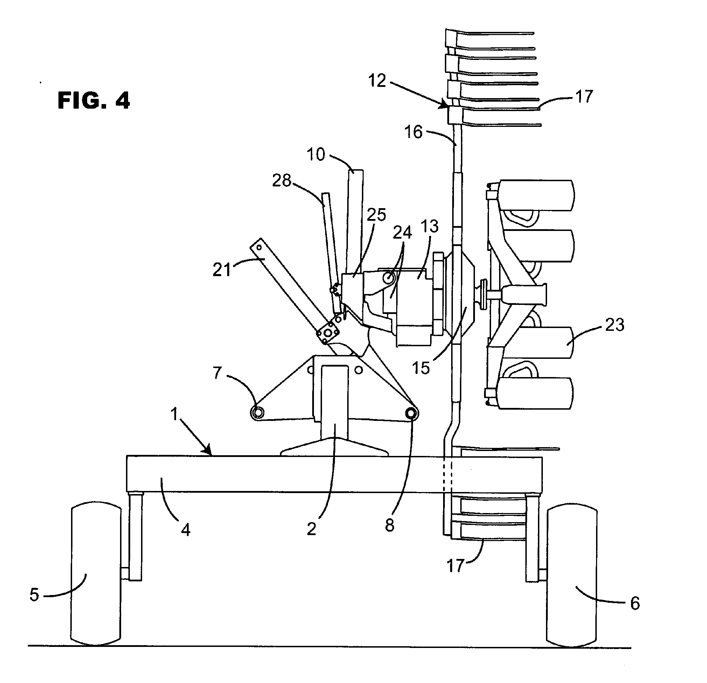

Comme cela ressort clairement des figures 2 à 4, le carter (13) de chaque roue râteleuse (11 et 12) est articulé à travers un croisillon (24) sur un coulisseau (25). Ce coulisseau (25) est déplaçable longitudinalement sur la partie extérieure (26) du bras (9, 10) correspondant. Ce déplacement est effectué au moyen d'un second vérin hydraulique (27, 28) qui est articulé, d'une part, sur ledit coulisseau (25) et, d'autre part, sur le bras (9, 10) correspondant. Chaque second vérin hydraulique (27, 28) peut être à double effet de manière à pouvoir déplacer le coulisseau (25) correspondant vers l'extrémité extérieure du bras (9, 10) correspondant ou vers son extrémité intérieure.

Chaque bras latéral (9, 10) est coudé. Dans l'exemple des figures annexées chacun est réalisé en deux parties (26 et 29) assemblées et formant entre elles un angle (α) d'environ 140°. Dans la position de travail représentée sur la figure 2, la partie extérieure (26) de chaque bras latéral (9, 10) est dirigée obliquement vers le sol tandis que sa partie intérieure (29) est dirigée obliquement vers le haut à partir de l'axe d'articulation (7, 8) correspondant.

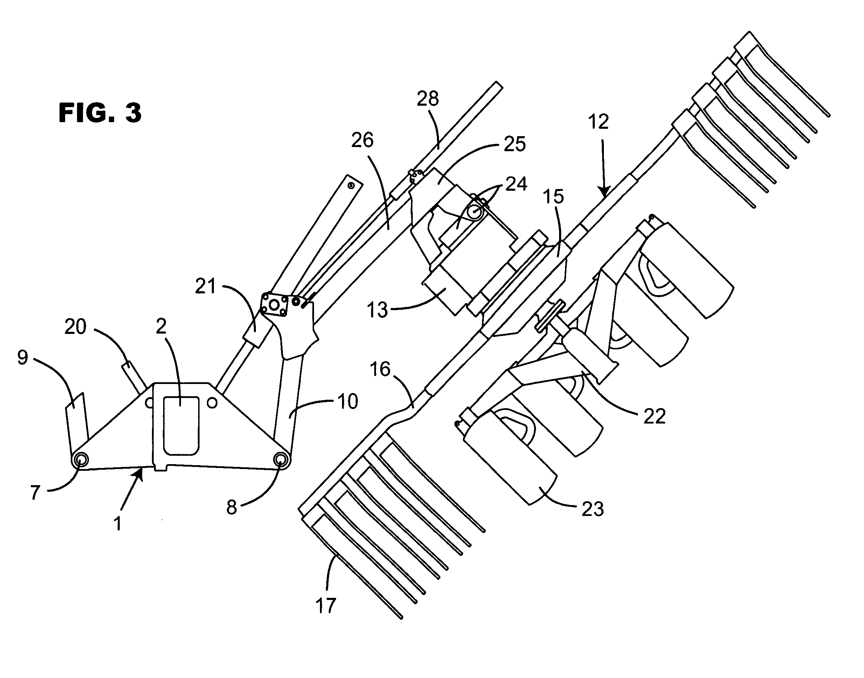

Chaque roue râteleuse (11, 12) peut être déplacée au moyen de son bras (9, 10) de la position de travail (figure 2) où ses roues (23) roulent sur le sol, dans une position intermédiaire (figure 3) dans laquelle elle est considérablement éloignée du sol. La machine comporte des moyens (30) qui combinent un déplacement en hauteur de chaque bras latéral (9, 10) autour de l'axe (7, 8) avec la structure porteuse (1) et un déplacement longitudinal de la roue râteleuse (11, 12) correspondante sur ledit bras (9, 10) lors du passage de la position de travail dans la position intermédiaire et inversement. Selon l'invention, ces moyens (30) sont constitués par le premier vérin hydraulique (20, 21), le second vérin hydraulique (27, 28) et une boîte (31) qui commande simultanément les deux vérins hydrauliques (20, 27 et 21, 28) qui se rapportent à chaque roue râteleuse (11, 12).

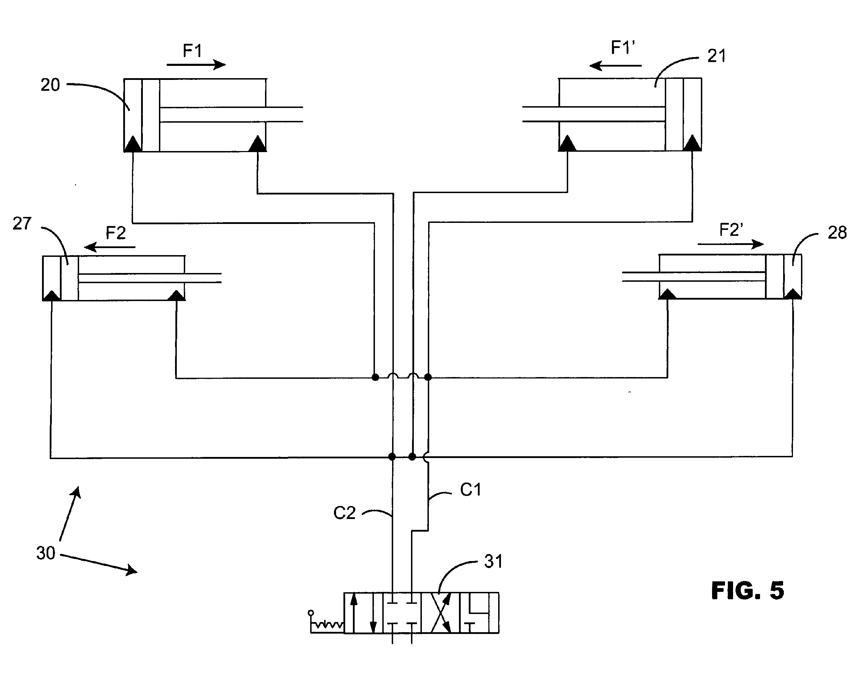

Il ressort de la figure 5 que deux circuits hydrauliques (C1 et C2) s'étendent de la boîte (31) aux premiers vérins hydrauliques (20 et 21) et aux seconds vérins hydrauliques (27 et 28). Le circuit (C1) commande simultanément les premiers vérins (20 et 21) dans le sens des flèches (F1 et F1') de sorte qu'ils déplacent les bras latéraux (9, 10) vers le haut et les seconds vérins (27 et 28) dans le sens des flèches (F2 et F2') de sorte qu'ils déplacent les coulisseaux (25) et les roues râteleuses (11, 12) correspondantes vers les extrémités extérieures desdits bras (9, 10). Ce circuit est activé pour amener les roues râteleuses (11 et 12) rapidement de la position de travail dans la position intermédiaire. Le circuit (C2) permet de commander les premiers vérins hydrauliques (20 et 21) et les seconds vérins hydrauliques (27 et 28) dans les sens opposés aux flèches (F1, F1' et F2, F2') pour la mise en position de travail à partir de la position intermédiaire.

La combinaison des déplacements en hauteur par pivotement des bras latéraux (9 et 10) et des déplacements longitudinaux sur lesdits bras (9 et 10) des roues râteleuses (11 et 12) permet d'obtenir des transpositions conséquentes et très rapides de ces dernières. Ainsi, lors des manoeuvres en bout de terrain, l'utilisateur n'est pas obligé de ralentir la vitesse d'avancement ni de prendre des précautions particulières pour effectuer les transpositions.

Pour la mise en position de transport les bras (9 et 10) et les roues râteleuses (11 et 12) sont pivotés dans une position quasi verticale pour diminuer la largeur de la machine. En sus, lesdites roues râteleuses (11 et 12) sont déplacées longitudinalement sur les bras (9 et 10) correspondants vers le bas pour être rapprochées du sol, en vue de réduire la hauteur de la machine. Les bras (9 et 10) coudés permettent en sus d'amener les roues râteleuses (11 et 12) très près du milieu de la machine de manière à réduire au maximum sa largeur dans cette position.

Il est bien évident que l'invention n'est pas limitée au mode de réalisation décrit ci-dessus et représenté sur les dessins annexés. Des modifications restent possibles dans la limite définie dans les revendications.

## Revendications

1. Machine de fenaison, notamment une andaineuse de végétaux couchés sur le sol, comportant une structure porteuse sur laquelle est articulé au moins un bras latéral qui est muni d'une roue râteleuse, laquelle roue râteleuse est déplaçables au moyen dudit bras latéral dans au moins une position de travail, une position intermédiaire et une position de transport, ***caractérisée par le fait qu'***elle comporte des moyens (30) constitués par un premier vérin hydraulique (20, 21) qui déplace le bras latéral (9, 10) par rapport à la structure porteuse (1), un second vérin hydraulique (27, 28) qui déplace la roue râteleuse (11, 12) longitudinalement sur ledit bras (9, 10) et une boîte (31) qui commande simultanément les deux vérins hydrauliques (20 et 27, 21 et 28) et combinant un déplacement vers le haut du bras latéral (9, 10) par rapport à la structure porteuse (1) et un déplacement longitudinal de la roue râteleuse (11, 12) vers l'extrémité extérieure dudit bras latéral (9, 10) lors du passage de la position de travail dans la position intermédiaire.

2. Machine de fenaison selon la revendication 1, ***caractérisée par le fait* que** les deux vérins hydrauliques (20 et 27, 21 et 28) sont à double effet.

3. Machine de fenaison selon la revendication 1 ou 2, ***caractérisée par le fait* que** le bras latéral (9, 10) est coudé et que le déplacement de la roue râteleuse (11, 12) vers l'extrémité extérieure dudit bras latéral (9, 10) s'effectue sur une partie extérieure (26) de ce dernier qui est dirigée obliquement vers le sol en position de travail.

4. Machine de fenaison selon la revendication 3, ***caractérisée par** le fait* le bras (9, 10) coudé est réalisé en deux parties (26, 29) assemblée et formant entre elles un angle (α) d'environ 140°.

5. Machine de fenaison selon la revendication 4, ***caractérisée par** le fait* le bras (9, 10) coudé comporte une partie intérieure (29) qui est dirigée obliquement vers le haut en position de travail, à partir de l'axe d'articulation (7, 8) sur la structure porteuse (1).

6. Machine de fenaison selon l'une quelconque des revendications 1 à 5, ***caractérisée par le fait* que** la roue râteleuse (11, 12) est reliée à un coulisseau (25) pouvant être déplacé au moyen du second vérin hydraulique (27, 28) sur la partie extérieure (26) du bras (9, 10).

7. Machine de fenaison selon la revendication 6, ***caractérisée par le fait* que** la roue râteleuse (11, 12) est reliée au coulisseau (25) au moyen d'un croisillon (24).

8. Machine selon l'une quelconque des revendications précédentes, ***caractérisée par le fait* que** les premier et second vérins hydrauliques (20 et 27, 21 et 28) de chaque roue râteleuse sont reliés à la boîte de commande (31) à travers des circuits hydrauliques (C1 et C2) communs.

## Claims

1. Haymaking machine, in particular a windrower for plants lying on the ground, comprising a supporting structure on which there is articulated at least one lateral arm which is provided with a raking wheel, which raking wheel is displaceable by means of said lateral arm in at least one work position, one intermediate position and one transport position, ***characterized in* that** it comprises means (30) constituted by a first hydraulic jack (20, 21) which displaces the lateral arm (9, 10) with respect to the supporting structure (1), a second hydraulic jack (27, 28) which displaces the raking wheel (11, 12) longitudinally on said lateral arm (9, 10) and a control box (31) which controls simultaneously the two hydraulic jacks (20 and 27, 21 and 28), which means (30) combine an upward displacement of the lateral arm (9, 10) with respect to the supporting structure (1) and a longitudinal displacement of the raking wheel (11, 12) towards the outer end of said lateral arm (9, 10) on passage from the work position into the intermediate position.

2. Haymaking machine according to Claim 1, ***characterized in* that** the two hydraulic jacks (20 and 27, 21 and 28) are double-acting.

3. Haymaking machine according to Claim 1 or 2, ***characterized in* that** the lateral arm (9, 10) is bent and that the displacement of the raking wheel (11, 12) towards the outer end of said lateral arm (9, 10) is carried out on an outer part (26) of the lateral arm (9, 10) which is directed obliquely towards the ground in the work position.

4. Haymaking machine according to Claim 3, ***characterized in* that** the bent arm (9, 10) is made in two assembled parts (26, 29) which form between them an angle (□) of approximately 140°.

5. Haymaking machine according to Claim 4, ***characterized in* that** the bent arm (9, 10) comprises an inner part (29) which is directed obliquely upwards in the work position, from the articulation axis (7, 8) on the supporting structure (1).

6. Haymaking machine according to any one of Claims 1 to 5, ***characterized in* that** the raking wheel (11, 12) is connected to a slide (25) being able to be displaced by means of the second hydraulic jack (27, 28) on the outer part (26) of the lateral arm (9, 10).

7. Haymaking machine according to Claim 6, ***characterized in* that** the raking wheel (11, 12) is connected to the slide (25) by means of a cross-piece (24).

8. Machine according to any one of the preceding claims, ***characterized in* that** the first and second hydraulic jacks (20 and 27, 21 and 28) of each raking wheel are connected to the control box (31) through shared hydraulic circuits (C1 and C2).

## Patentansprüche

1. Heuwerbungsmaschine, insbesondere Schwader für auf dem Boden liegende Pflanzen, mit einer Tragstruktur, an der mindestens ein Seitenarm angelenkt ist, der mit einem Rechrad versehen ist, wobei das Rechrad mittels des Seitenarms in mindestens eine Arbeitsstellung, eine Zwischenstellung und eine Transportstellung verschiebbar ist, ***dadurch gekennzeichnet,* dass** sie Mittel (30) umfasst, die von einem ersten Hydraulikzylinder (20, 21), der den Seitenarm (9, 10) in Bezug zur Tragstruktur (1) verschiebt, einem zweiten Hydraulikzylinder (27, 28), der das Rechrad (11, 12) längs auf dem Seitenarm (9, 10) verschiebt, und einem Steuergehäuse (31), das gleichzeitig die beiden Hydraulikzylinder (20 und 27, 21 und 28) steuert, gebildet sind, und dass die Mittel (30), beim Übergang von der Arbeitsstellung in die Zwischenstellung, eine Verschiebung des Seitenarms (9, 10) nach oben in Bezug zur Tragstruktur (1) und eine Längsverschiebung des Rechrades (11, 12) zum äußeren Ende des Seitenarms (9, 10) kombinieren.

2. Heuwerbungsmaschine nach Anspruch 1, ***dadurch gekennzeichnet,* dass** die beiden Hydraulikzylinder (20 und 27, 21 und 28) doppelwirkend sind.

3. Heuwerbungsmaschine nach Anspruch 1 oder 2, ***dadurch gekennzeichnet,* dass** der Seitenarm (9, 10) abgewinkelt ist, und dass die Verschiebung des Rechrades (11, 12) zum äußeren Ende des Seitenarms (9, 10) auf einem äußeren Teil (26) des Seitenarms (9, 10) erfolgt, wobei der äußere Teil in Arbeitsstellung schräg auf den Boden gerichtet ist.

4. Heuwerbungsmaschine nach Anspruch 3, ***dadurch gekennzeichnet,* dass** der abgewinkelte Seitenarm (9, 10) in zwei zusammengefügten Teilen (26, 29) ausgeführt ist, die zwischen sich einen Winkel (α) von ungefähr 140° bilden.

5. Heuwerbungsmaschine nach Anspruch 4, ***dadurch gekennzeichnet,* dass** der abgewinkelte Seitenarm (9, 10) einen inneren Teil (29) umfasst, der in Arbeisstellung von der Gelenkachse (7, 8) aus auf der Tragstruktur (1) schräg nach oben gerichtet ist.

6. Heuwerbungsmaschine nach irgend einem der Ansprüche 1 bis 5, ***dadurch gekennzeichnet,* dass** das Rechrad (11, 12) mit einem Gleitschieber (25) verbunden ist, der mittels des zweiten Hydraulikzylinders (27, 28) auf dem äußeren Teil (26) des Seitenarms (9, 10) verschoben werden kann.

7. Heuwerbungsmaschine nach Anspruch 6, ***dadurch gekennzeichnet,* dass** das Rechrad (11, 12) mit dem Gleitschieber (25) mittels eines Kreuzstückes (24) verbunden ist.

8. Maschine nach irgend einem der vorhergehenden Ansprüche, ***dadurch gekennzeichnet,* dass** der erste und der zweite Hydraulikzylinder (20 und 27, 21 und 28) jedes Rechrades mit dem Steuergehäuse (31) über gemeinsame Hydraulikkreise (C1 und C2) verbunden sind.
